# EUROPÄISCHE PATENTSCHRIFT

(11) **EP 2 212 172 B1**
(45) Veröffentlichungstag und Bekanntmachung des Hinweises auf die Patenterteilung: **20.07.2011**
(21) Anmeldenummer: 08841937.9
(22) Anmeldetag: 26.09.2008
(51) Int. Cl.: B60W 10/06, B60W 10/08, B60W 20/00, B60W 10/30, B60K 6/48

(54) **VERFAHREN ZUM BETREIBEN EINER HYBRIDANTRIEBSVORRICHTUNG SOWIE HYBRIDANTRIEBSVORRICHTUNG**
METHOD FOR OPERATING A HYBRID DRIVE DEVICE AND HYBRID DRIVE DEVICE
PROCÉDÉ D'UTILISATION D'UN SYSTÈME D'ENTRAÎNEMENT HYBRIDE ET SYSTÈME D'ENTRAÎNEMENT HYBRIDE

(30) Priorität: 19.10.2007 DE 102007050117
(43) Veröffentlichungstag der Anmeldung: 04.08.2010
(73) Patentinhaber: Robert Bosch GmbH, 70442 Stuttgart (DE)
(72) Erfinder: SEEL, Andreas, 71282 Hemmingen (DE); MUHLER, Michael, 71735 Eberdingen (DE)
(86) Internationale Anmeldenummer: PCT/EP2008/062934
(87) Internationale Veröffentlichungsnummer: WO 2009/053212

(56) Entgegenhaltungen:
- EP-A- 0 645 271
- EP-A- 0 908 343
- EP-A- 1 182 074
- EP-A- 1 249 360
- EP-A- 1 459 931
- WO-A-2007/024013
- DE-A1- 19 513 710
- DE-A1- 19 748 423
- DE-A1-102004 024 213
- DE-A1-102005 039 316
- JP-A- 2004 324 424
- US-A1- 2004 194 452
- US-B1- 6 484 833

## Beschreibung

Die Erfindung betrifft ein Verfahren zum Betreiben einer Hybridantriebsvorrichtung eines Fahrzeugs, die mindestens eine Brennkraftmaschine und mindestens eine elektrische Maschine aufweist, die mittels mindestens einer Kupplung miteinander wirkverbindbar sind, wobei der Hybridantriebsvorrichtung in einem Leerlaufbetrieb eine Leerlaufdrehzahl vorgegeben wird.

### Stand der Technik

Verfahren der eingangs genannten Art sind bekannt. Dabei wird die Leerlaufdrehzahl im Wesentlichen durch eine Mindestdrehzahl der Brennkraftmaschine bestimmt, die gewährleistet werden muss, damit die Brennkraftmaschine nicht abstirbt. Dabei wird ein Drehzahl-Istwert mit einem Drehzahl-Sollwert verglichen und ein entsprechendes Drehmoment berechnet, um die Ist-Drehzahl der Soll-Drehzahl anzunähern. Wobei bei der Hybridantriebsvorrichtung das Drehmoment in separate Drehmomentanforderungen an die elektrische Maschine und die Brennkraftmaschine aufgeteilt wird, die dann zusammen, bei geschlossener Kupplung die Leerlaufdrehzahl der Hybridantriebsvorrichtung bewirken.

Die EP 0908343 offenbart ein gattungsgemäßes Hybridantriebssystem bei dem beim Fahrzeugstillstand der Verbrennungsmotor gestoppt wird und mittels eines Elektromotors Zusatzeinrichtungen weiter betrieben werden.

### Offenbarung der Erfindung

Erfindungsgemäß ist vorgesehen, dass bei geöffneter Kupplung die Leerlaufdrehzahl der elektrischen Maschine und eine bestimmte Soll-Drehzahl der Brennkraftmaschine vorgegeben wird. Es ist hierbei also vorgesehen, dass die Abtriebs-Leerlaufdrehzahl von der elektrischen Maschine bewirkt wird und gleichzeitig der Brennkraftmaschine eine Soll-Drehzahl vorgegeben wird, die unabhängig von der Leerlaufdrehzahl der elektrischen Maschine vorgegeben wird. Mit anderen Worten werden im Leerlaufbetrieb zwei Drehzahlen generiert, von denen die eine Drehzahl als Leerlaufdrehzahl der elektrischen Maschine und die andere Drehzahl als (bestimmte) Soll-Drehzahl der Brennkraftmaschine vorgegeben wird. Durch das Betreiben der elektrischen Maschine mit der Leerlaufdrehzahl, werden beispielsweise Nebenaggregate der Hybridantriebsvorrichtung angetrieben oder das Fahrzeug bei geschlossener Anfahrkupplung mit der Leerlaufdrehzahl in Bewegung gesetzt. Durch das Ansteuern der elektrischen Maschine und der Brennkraftmaschine mit voneinander unabhängigen Drehzahlen können unabhängige Ziele auf einfache Art und Weise kombiniert werden. Erfindungsgemäß wird, während der elektrischen Maschine die Leerlaufdrehzahl vorgegeben wird, der Brennkraftmaschine eine Diagnosedrehzahl vorgegeben. Bei dieser Diagnosedrehzahl ist es möglich eine Selbstdiagnose der Brennkraftmaschine durchzuführen, die beispielsweise einen Rückschluss auf den Betriebszustand, die Funktion und auf andere betriebsrelevante Eigenschaften der Brennkraftmaschine zulässt. Im Leerlaufbetrieb der Hybridantriebsvorrichtung ergibt sich somit der Vorteil, dass der Betriebszustand der Hybridantriebsvorrichtung dem Fahrer wie bei einem konventionellen Betreiben der Hybridantriebsvorrichtung vorkommt, wobei er beispielsweise das Fahrzeug durch Schließen der Anfahrkupplung mit der Leerlaufdrehzahl in Bewegung versetzen kann und gleichzeitig die Brennkraftmaschine einer Diagnose unterzogen wird, die sich nicht auf den Leerlaufbetrieb des Fahrzeugs auswirkt.

Nach einer Weiterbildung der Erfindung wird der Brennkraftmaschine eine Katalysator-Heizdrehzahl vorgegeben. Hierunter ist eine Drehzahl zu verstehen, die insbesondere zum schnellen Aufheizen eines der Brennkraftmaschine nachgeschalteten Abgaskatalysators dient. Bei einem Kaltstart der Hybridantriebsvorrichtung wird somit die Brennkraftmaschine bis zur Katalysator-Heizdrehzahl hochlaufen, sodass dieser sich schnell erwärmt und seine Betriebstemperatur erreicht, wobei gleichzeitig Nebenaggregate der Hybridantriebsvorrichtung oder das Fahrzeug mit der Leerlaufdrehzahl durch die elektrische Maschine angetrieben werden.

Weiterhin ist vorgesehen, dass der Brennkraftmaschine eine wirkungsgradoptimierte Drehzahl vorgegeben wird. Hierdurch wird die Brennkraftmaschine in Bereichen günstiger Wirkungsgrade in Bezug auf Kraftstoffverbrauch und/oder Schadgasausstoß betrieben. Auf einen Aufbau einer Momentenreserve, wie es bei konventionellen Antriebsvorrichtungen häufig vorkommt, um die Dynamik der Brennkraftmaschine zu erhöhen, wird hierbei vorteilhafterweise verzichtet. Die Dynamik der Hybridantriebsvorrichtung wird bei einer Drehmomentanforderung durch den Fahrer zweckmäßigerweise durch die elektrische Maschine im Wesentlichen gewährleistet.

Nach einer Weiterbildung der Erfindung wird die Leerlaufdrehzahl, die der elektrischen Maschine vorgegeben wird, in Abhängigkeit von antreibbaren Nebenaggregaten der Hybridantriebsvorrichtung bestimmt. Je nach dem welche Nebenaggregate von der Hybridantriebsvorrichtung angetrieben werden müssen, wie zum Beispiel ein Klimakompressor, eine Ölpumpe eines Getriebes oder Ähnliches, wird die Leerlaufdrehzahl der elektrischen Maschine variiert vorgegeben, sodass die Nebenaggregate stets optimal angetrieben werden.

Weiterhin ist vorgesehen, dass als Leerlaufdrehzahl eine Rolldrehzahl des Fahrzeugs vorgegeben wird. Unter einer Rolldrehzahl ist hierbei die Drehzahl der Hybridantriebsvorrichtung zu verstehen, mit der das Fahrzeug im Leerlaufbetrieb, also ohne dass ein Drehmomentwunsch beispielsweise mittels eines Gaspedals von einem Fahrer angefordert wird, durch die Hybridantriebsvorrichtung angetrieben wird. Nimmt der Fahrer also beispielsweise seinen Fuß von einem Kupplungspedal, oder bei einem Fahrzeug mit Automatikgetriebe von einem entsprechenden Bremspedal, so setzt sich das Fahrzeug mit der durch ein Getriebe umgewandelten Leerlaufdrehzahl in Bewegung, wobei die Rolldrehzahl vorteilhafterweise so gewählt wird, dass sie im Wesentlichen einer Leerlaufdrehzahl der Brennkraftmaschine entspricht, sodass der Fahrer, wenn er seinen Fuß von dem Kupplungspedal nimmt, stets das gleiche Fahrzeugverhalten erlebt, unabhängig davon ob die Leerlaufdrehzahl von der Brennkraftmaschine oder der elektrischen Maschine erbracht wird.

Schließlich ist vorgesehen, dass beim Übergang von geöffneter zu geschlossener Kupplung der Brennkraftmaschine eine Synchronisations-Drehzahl vorgegeben wird, sodass beim Schließen der Kupplung beide Antriebsaggregate mit der gleichen Drehzahl laufen.

Weiterhin betrifft die Erfindung eine Hybridantriebsvorrichtung eines Fahrzeugs, mit mindestens einer Brennkraftmaschine und mindestens einer elektrischen Maschine, die mittels mindestens einer Kupplung miteinander wirkverbindbar sind, mindestens eine Leerlauf-Reglereinheit aufweist, die in einem Leerlaufbetrieb der Hybridantriebsvorrichtung eine Leerlaufdrehzahl vorgibt. Die erfindungsgemäße Hybridantriebsvorrichtung ist derart ausgebildet, dass die Leerlauf-Reglereinheit die Leerlaufdrehzahl der elektrischen Maschine und eine bestimmte Soll-Drehzahl der Brennkraftmaschine vorgibt. Die Leerlauf-Reglereinheit weist hierzu erfindungsgemäß mindestens zwei Reglerkerne auf, von denen einer die Leerlaufdrehzahl der elektrischen Maschine und der andere die Soll-Drehzahl der Brennkraftmaschine regelt.

### Kurze Beschreibung der Zeichnungen

Im Folgenden soll die Erfindung anhand einer Figur näher erläutert werden. Dazu zeigt die

Figur ein schematisches Ausführungsbeispiel des vorteilhaften Verfahrens.

### Ausführungsform(en) der Erfindung

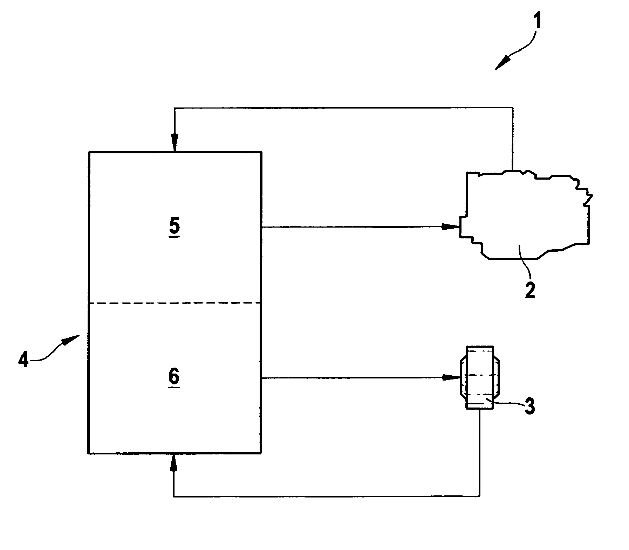

Die Figur zeigt in einer vereinfachten Darstellung eine Hybridantriebsvorrichtung 1, die eine Brennkraftmaschine 2 sowie eine elektrische Maschine 3 aufweist, wobei eine Kurbelwelle der Brennkraftmaschine 2 mit einer Rotorwelle der elektrischen Maschine 3 mechanisch wirkverbindbar ist (hier nicht näher dargestellt). Bei der Hybridantriebsvorrichtung 1 handelt es sich bevorzugt um eine in Reihe geschaltete Hybridantriebsvorrichtung 1, wobei die Kurbelwelle der Brennkraftmaschine 2 mittels einer Kupplung mit der Rotorwelle der elektrischen Maschine 3 wirkverbunden werden kann, sodass bei geschlossener Kupplung die Brennkraftmaschine 2 und die elektrische Maschine 3 mit der gleichen Drehzahl laufen und ihre Drehmomente addiert werden. Die Rotorwelle der elektrischen Maschine 3 ist weiterhin vorteilhafterweise mittels einer

Anfahrkupplung mit einer Getriebeeingangswelle eines Getriebes des die Hybridantriebsvorrichtung 1 aufweisenden Fahrzeugs wirkverbindbar (hier nicht dargestellt). Die Figur zeigt weiterhin eine Leerlauf-Reglereinheit 4, die den Sollbetriebszustand der Hybridantriebsvorrichtung 1 erfasst. Erfasst die Leerlauf-Reglereinheit 4, dass ein Leerlaufbetrieb der Hybridantriebsvorrichtung 1 erwünscht ist, so gibt sie der Hybridantriebsvorrichtung 1 eine Leerlaufdrehzahl vor, die bei geschlossener Kupplung von der Brennkraftmaschine 2 und der elektrischen Maschine 3 zusammen bewirkt wird, wobei in diesem Fall die Leerlauf-Reglereinheit 4 die Brennkraftmaschine 2 und die elektrische Maschine 3 jeweils mit einem Soll-Drehmoment zum Erreichen der Leerlaufdrehzahl beaufschlagt.

Erfasst die Leerlauf-Reglereinheit 4, dass die Kupplung zwischen Brennkraftmaschine 2 und elektrischer Maschine 3 geöffnet ist, gibt die Leerlauf-Reglereinheit 4 der elektrischen Maschine 3 die Leerlaufdrehzahl vor und der Brennkraftmaschine 2 eine bestimmte Soll-Drehzahl, mit einer Drehzahl größer oder gleich Null. Die Leerlauf-Reglereinheit 4 weist dazu zwei Reglerkerne 5 und 6 auf, von denen einer der Brennkraftmaschine 2 und der andere der elektrischen Maschine 3 zugeordnet ist. Der Reglerkern 5 vergleicht die Ist-Drehzahl der Brennkraftmaschine 2 mit der ihr vorgegebenen Soll-Drehzahl und beeinflusst entsprechend das Drehmoment der Brennkraftmaschine 2, sodass sie die ihr vorgegebene Drehzahl erreicht. Der Reglerkern 6 ist der elektrischen Maschine 3 zugeordnet und vergleicht die Ist-Drehzahl dieser mit der ihr vorgegebenen Leerlaufdrehzahl. Weicht die elektrische Maschine 3 von der vorgegebenen Leerlaufdrehzahl ab, so regelt der Reglerkern 6 das Drehmoment der elektrischen Maschine 3 derart, dass sie die gewünschte Leerlaufdrehzahl erreicht. Die Drehzahlen der Brennkraftmaschine 2 und der elektrischen Maschine 3 werden hierbei vorteilhafterweise mittels den Abtriebswellen oder Nockenwellen der Brennkraftmaschine 2 beziehungsweise der elektrischen Maschine 3 zugeordneten Drehzahlsensoren erfasst.

Die der elektrischen Maschine 3 vorgegebene Leerlaufdrehzahl wird vorteilhafterweise in Abhängigkeit von anzutreibenden Nebenaggregaten und/oder einer Rolldrehzahl des Fahrzeugs bestimmt. Während die Leerlaufdrehzahl der Hybridantriebsvorrichtung 1 durch die elektrische Maschine 3 bewirkt wird, wird der Brennkraftmaschine 2 vorteilhafterweise eine Diagnosedrehzahl vorgegeben, die eine Diagnose der Funktion und/oder des Betriebszustandes der Brennkraftmaschine 2 erlaubt. Hierbei kann also gleichzeitig neben dem Leerlaufbetrieb der Hybridantriebsvorrichtung 1 eine Diagnose der Brennkraftmaschine 2 stattfinden, ohne dass der Leerlaufbetrieb der Hybridantriebsvorrichtung 1 beeinflusst wird.

In einem weiterführenden Ausführungsbeispiel wird der Brennkraftmaschine 2 der Hybridantriebsvorrichtung 1 eine Katalysator-Heizdrehzahl vorgegeben, die derart gewählt ist, dass ein der Brennkraftmaschine 2 nachgeschalteter Abgaskatalysator durch die von der Brennkraftmaschine 2 erzeugten Abgase besonders schnell aufgeheizt und auf seine (optimale) Betriebstemperatur gebracht wird. Hierdurch wird insbesondere bei einem Kaltstart der Hybridantriebsvorrichtung 1 ermöglicht, dass der Abgaskatalysator besonders schnell seine Betriebstemperatur erreicht und die Hybridantriebsvorrichtung 1 sich gleichzeitig im Leerlaufbetrieb befindet. Sobald der Abgaskatalysator seine Betriebstemperatur erreicht hat, kann beispielsweise die Kupplung zwischen Brennkraftmaschine 2 und elektrischer Maschine 3 geschlossen werden, sodass beide Antriebsaggregate 2, 3 mit der gleichen Drehzahl laufen und sich ihre Drehmomente addieren. Durch die schnelle Aufheizung des Abgaskatalysators kann hierbei die Brennkraftmaschine 2 bereits früh stark beansprucht werden, da die von ihr erzeugten Abgase von dem Abgaskatalysator durch das schnelle Aufheizen früh nachbehandelt werden können. Schnelle Drehmomentänderungen und/oder -anforderungen werden im Normalbetrieb der Hybridantriebsvorrichtung 1 durch die elektrische Maschine 3 schnell kompensiert und/oder gestellt. Gelangt die Hybridantriebsvorrichtung 1 nach der Warmlaufphase wieder in einen Leerlaufbetrieb, und ist die Kupplung zwischen Brennkraftmaschine 2 und elektrischer Maschine 3 geöffnet, so wird der Brennkraftmaschine 2 vorteilhafterweise eine wirkungsgradoptimierte Drehzahl vorgegeben, sodass die Brennkraftmaschine 2 insbesondere besonders schadstoff- und verbrauchsarm betrieben wird.

Zweckmäßigerweise weist die Leerlauf-Reglereinheit 4 geeignete Mechanismen auf, die für einen Übergang zwischen den zwei getrennten Soll-Drehzahlen für Brennkraftmaschine 2 und elektrische Maschine 3 zu oder von einer Leerlaufdrehzahl geeignet sind. Prinzipiell ist das vorteilhafte Verfahren auch auf Systeme mit mehr als zwei Antriebsaggregaten anwendbar, wobei dann eine entsprechende Anzahl von Soll-Drehzahlen vorgebbar sind. Ebenfalls ist das vorteilhafte Verfahren auf (Leerlauf-)Drehzahlen deutlich oberhalb üblicher Leerlaufdrehzahlen anwendbar. So kann das Verfahren auch für eine Drehzahlregelung bei einem Brennkraftmaschinenstart aus elektrischer Fahrt verwendet werden.

## Patentansprüche

1. Verfahren zum Betreiben einer Hybridantriebsvorrichtung eines Fahrzeugs, die mindestens eine Brennkraftmaschine und mindestens eine elektrische Maschine aufweist, die mittels mindestens einer Kupplung miteinander wirkverbindbar sind, wobei der Hybridantriebsvorrichtung im Leerlaufbetrieb eine Leerlaufdrehzahl vorgegeben wird, wobei bei geöffneter Kupplung die Leerlaufdrehzahl der elektrischen Maschine und eine bestimmte Soll-Drehzahl der Brennkraftmaschine vorgegeben wird.
**dadurch gekennzeichnet, dass** der Brennkraftmaschine eine Diagnosedrehzahl vorgegeben wird.

2. Verfahren nach einem der vorhergehenden Ansprüche, **dadurch gekennzeichnet, dass** der Brennkraftmaschine eine Katalysator-Heizdrehzahl vorgegeben wird.

3. Verfahren nach einem der vorhergehenden Ansprüche, **dadurch gekennzeichnet, dass** der Brennkraftmaschine eine wirkungsgradoptimierte Drehzahl vorgegeben wird.

4. Verfahren nach einem der vorhergehenden Ansprüche, **dadurch gekennzeichnet, dass** die Leerlaufdrehzahl in Abhängigkeit von antreibbaren Nebenaggregaten der Hybridantriebsvorrichtung bestimmt wird.

5. Verfahren nach einem der vorhergehenden Ansprüche, **dadurch gekennzeichnet, dass** als Leerlaufdrehzahl eine Rolldrehzahl des Fahrzeugs vorgegeben wird.

6. Verfahren nach einem der vorhergehenden Ansprüche, **dadurch gekennzeichnet, dass** bei einem Übergang von geöffneter Kupplung zu geschlossener Kupplung der Brennkraftmaschine eine Synchronisations-Drehzahl vorgegeben wird.

7. Hybridantriebsvorrichtung eines Fahrzeugs, insbesondere zur Durchführung des Verfahrens nach einem oder mehreren der vorhergehenden Ansprüche, mit mindestens einer Brennkraftmaschine und mindestens einer elektrischen Maschine, die mittels mindestens einer Kupplung miteinander wirkverbindbar sind, wobei die Hybridantriebsvorrichtung mindestens eine Leerlauf-Reglereinheit aufweist, die in einem Leerlaufbetrieb der Hybridantriebsvorrichtung eine Leerlaufdrehzahl vorgibt, wobei die Leerlauf-Reglereinheit (4) die Leerlaufdrehzahl der elektrischen Maschine (3) und eine bestimmte Soll-Drehzahl der Brennkraftmaschine (2) vorgibt,
**dadurch gekennzeichnet, dass** die Leerlauf-Reglereinheit (4) mindestens zwei Reglerkerne (5, 6) aufweist.

## Claims

1. Method for operating a hybrid drive apparatus of a vehicle, which hybrid drive apparatus has at least one internal combustion engine and at least one electric machine which can be operatively connected to one another by means of at least one clutch, an idling rotational speed being predefined for the hybrid drive apparatus in idling mode, the idling rotational speed of the electric machine and a defined setpoint rotational speed of the internal combustion engine being predefined when the clutch is open, **characterized in that** a diagnosis rotational speed is predefined for the internal combustion engine.

2. Method according to Claim 1, **characterized in that** a catalytic-converter heating rotational speed is predefined for the internal combustion engine.

3. Method according to one of the preceding claims, **characterized in that** a rotational speed which is optimized in terms of the degree of efficiency is predefined for the internal combustion engine.

4. Method according to one of the preceding claims, **characterized in that** the idling rotational speed is determined as a function of drivable auxiliary assemblies of the hybrid drive apparatus.

5. Method according to one of the preceding claims, **characterized in that** a rolling rotational speed of the vehicle is predefined as idling rotational speed.

6. Method according to one of the preceding claims, **characterized in that**, during a transition from open clutch to closed clutch, a synchronization rotational speed is predefined for the internal combustion engine.

7. Hybrid drive apparatus of a vehicle, in particular for carrying out the method according to one or more of the preceding claims, having at least one internal combustion engine and at least one electric machine which can be operatively connected to one another by means of at least one clutch, the hybrid drive apparatus having at least one idling regulator unit which, in an idling mode, predefines an idling rotational speed for the hybrid drive apparatus, the idling regulator unit (4) predefining an idling rotational speed for the electric machine (3) and a defined setpoint rotational speed for the internal combustion engine (2), **characterized in that** the idling regulator unit (4) has at least two regulator cores (5, 6) .

## Revendications

1. Procédé d'utilisation d'un dispositif d'entraînement hybride pour véhicule, le système présentant au moins un moteur à combustion interne et au moins une machine électrique qui peuvent être reliés fonctionnellement l'un à l'autre au moyen d'un embrayage,
un régime de ralenti étant prédéterminé pour le fonctionnement de ralenti du dispositif d'entraînement hybride, le régime de ralenti du moteur électrique et un régime de consigne défini du moteur étant prédéterminés lorsque l'embrayage est ouvert, **caractérisé en ce que**
un régime de diagnostic est prédéterminé pour le moteur à combustion interne.

2. Procédé selon la revendication 1, **caractérisé en ce qu'**un régime de chauffage de catalyseur est prédéterminé pour le moteur à combustion interne.

3. Procédé selon l'une des revendications précédentes, **caractérisé en ce qu'**un régime de rendement optimum est prédéterminé pour le moteur à combustion interne.

4. Procédé selon l'une des revendications précédentes, **caractérisé en ce que** le régime de ralenti est déterminé en fonction des dispositifs secondaires motorisés du dispositif d'entraînement hybride.

5. Procédé selon l'une des revendications précédentes, **caractérisé en ce qu'**un régime de roulage du véhicule est prédéterminé comme régime de ralenti.

6. Procédé selon l'une des revendications précédentes, **caractérisé en ce que** lorsque l'embrayage passe de l'ouverture à la fermeture, un régime de synchronisation est prédéterminé pour le moteur à combustion interne.

7. Dispositif d'entraînement hybride pour véhicule automobile, en particulier en vue de l'exécution du procédé selon l'une ou plusieurs des revendications précédentes,
présentant au moins un moteur à combustion interne et au moins une machine électrique qui peuvent être reliés fonctionnement l'un à l'autre au moyen d'au moins un embrayage,
le dispositif d'entraînement hybride présentant au moins une unité de régulation de ralenti qui impose un régime de ralenti lorsque le dispositif d'entraînement hybride fonctionne au ralenti,
l'unité (4) de régulation de ralenti imposant le régime de ralenti de la machine électrique (3) et un régime de consigne défini du moteur à combustion interne (2),
**caractérisé en ce que**
l'unité (4) de régulation de ralenti présente au moins deux noyaux (5, 6) de régulateur.
